## Europäisches Patentamt

## European Patent Office

## Office européen des brevets

(11) Veröffentlichungsnummer: **0 082 488**
**A1**

# (12) EUROPÄISCHE PATENTANMELDUNG

(21) Anmeldenummer: **82111685.2**

(22) Anmeldetag: **16.12.82**

(51) Int. Cl.³: **B 01 D 46/24**
**B 01 D 29/04**

(30) Priorität: **23.12.81 IT 2583781**

(43) Veröffentlichungstag der Anmeldung:
**29.06.83 Patentblatt 83/26**

(84) Benannte Vertragsstaaten:
**AT CH DE FR GB LI**

(71) Anmelder: **AERON S.r.l.**
**Via Spiazzo 20**
**I-22050 Rovagnate - Como(IT)**

(72) Erfinder: **Bellieni, Giovanni Rolando**
**Viale Fulvio Testi, 176**
**I-20092 Cinisello Balsamo (Milano)(IT)**

(74) Vertreter: **Stockmair, Wilfried, Dr. Ing. Patentanwälte**
**Dipl.Ing.A.Grünecker**
**Dr.Ing.H.Kinkeldey,Dr.Ing.W.Stockmair et al,**
**Dr.rer.nat.K.Schumann,Dipl.Ing.P.H.Jakob**
**Dr.rer.nat.G.Bezold,Dipl.Ing.W.Meister**
**Dipl.Ing.H.Hilgers,Dr.Ing.H.Meyer-Plath**
**Maximilianstrasse 58**
**D-8000 München 22(DE)**

(54) **Vorrichtung für die Reinigung von gasförmigen und flüssigen Medien von toxischen Stoffen und Teilchen geringer Konzentration.**

(57) Vorrichtung für die Reinigung von gasförmigen und flüssigen Medien von toxischen Stoffen und Teilchen geringer Konzentration (2) in einem Raum oder aus irgendeinem Auslass oder im Innern einer Leitung.

Sie hat die Form eines Behälters und besteht aus einem einteiligen (12) Zentralkörper, aus einem Deckel (4) und einem Boden (30), die untereinander austauschbar sind.

Die Wände des Zentralkörpers (12) bestehen aus zwei Lochblechen (20, 22), die an ihren Endseiten mit Flanschelementen (34) miteinander verbunden sind und in ihrem Innern eine oder mehrere Schichten adsorbierender, gekörnter Stoffe (26), geringer zwischen 20 und 100 mm schwankender Stärke für das Abfangen von toxischen Stoffen und Teilchen >0,1 μm aufnehmen.

Damit die Kontaktzeit des flüssigen oder gasförmigen Mediums mit dem adsorbierenden Stoff (26) gleichförmig ist und sich an keiner Stelle bevorzugte Stromfäden bilden können, sind vor den Wänden (20, 22) des Zentralkörpers (12) mindestens eine Schicht aus einem leichten Vliesstoff (38) und vor derselben mehrere Schichten Filterpapier (40) und davor wiederum mindestens eine Schicht aus schwerem Vliesstoff (42) vorgesehen. Alle diese Schichten (38, 40, 42) liegen eng aneinander an und gewährleisten einen Durchgang des Mediums mit einer gleichbleibenden Geschwindig- keit zwischen 0,01 und 0,25 m/sec. Sie leichte Vliesstoff- schicht (38) verhindert die Haftung der Filterpapierschichten (40) an der internen Lochblechwand (22). Die Filterpapier- schichten (40) sind in der Lage, Teilchen >0,1 μm und diejenigen aus schwerem Vliesstoff (42) Teilchen >1 μm abzuscheiden.

Die Endabschnitte dieser Faserstoffschichten (38, 40, 42) gehen gedoppelt und umgelegt über die Flanschen (34) hinaus, mit welchen die Endseiten der beiden Lochbleche (20, 22) miteinander verbunden sind und können zwischen dem Deckel (4) (bzw. dem Boden (30)) und besagten Flanschen (34) eingeklemmt werden, um jeden Leckver- lust des kontaminierten Mediums aus dem Gerät (2) zu vermeiden.

Es ist weiterhin ein Filtersack (44) zum Abscheiden von Teilchen >2 μm vorgesehen, der mit dem Aussenrand an den oberen Endseiten der faserigen Filterschichten (38, 40, 42) endet und mit der Innenkante lösbar am oberen Ende einer mittleren Säule (28) aus am Unterteil gelochten Blech befestigt ist, wobei sich dieser Sack (44) bis nach unten hin erstreckt, jedoch vom Boden (30) distanziert ist.

Die mittlere, vorzugsweise zylindrische Blechsäule (28) ist zur Abstützung eines Motors (16) und des entsprechenden Laufrades (14) geeignet, falls es sich um ein gasförmiges

./...

Medium handelt und diese vorgesehen sind; sie ist unten am Boden (30) befestigt und oben in einen Diffusorzylinder (36) eingesetzt; letzterer ist am Deckel (4) angebracht und hat einen grösseren Durchmesser, als die oben genannte mittlere Säule (28) und ist am Unterteil der Umfangsfläche gelocht.

Das Durchflussmedium wird vom Diffusorzylinder (36) durch den Filtersack (44) zum Teil zu den Filterelementen (26, 38, 40, 42) und zum Teil zu der mittleren Lochblechsäule (28) geleitet, wo es den Motor (16) kühlen kann, wenn ein solcher vorhanden ist, und dann ebenfalls nach Durchgang durch den Filtersack (44) zu den Filterelementen (26, 38, 40, 42) gelangen kann.

Fig.1

0082488

— 1 —

"VORRICHTUNG FÜR DIE REINIGUNG VON GASFÖRMIGEN UND FLÜSSIGEN MEDIEN VON TOXISCHEN STOFFEN UND TEILCHEN GERINGER KONZENTRATION"

Die vorliegende Erfindung betrifft ein Gerät für die Reinigung von gasförmigen und flüssigen Medien von Giftstoffen und Teilchen geringer Konzentration.

Ausser den Molekülen von Giftstoffen kann dieses Gerät auch Partikel und Aerosol in einem Raume oder aus irgendeinem Auslass oder auch im Innern einer Leitung abscheiden.

Es stellt in dem entsprechenden Industriebereich einen erheblichen Fortschritt dar, denn es ermöglicht eine Reinigung des Mediums von toxischen Stadstoffen in Form von Molekülen, Partikeln und Aerosol geringer Konzentration auf rationelle und möglichst vollkommene Weise durch den Einsatz von relativ dünnen, zwischen 20 und 100 mm dicken Schichten, aus adsorbierenden gekörnten Stoffen in Verbindung mit Faserfilterschichten.

Dies wurde dadurch möglich, daß in der Reinigungsvorrichtung verschiedene konstruktive Besonderheiten vorgesehen sind, welche erlauben, daß der Aufprall des Mediums gegen die Wände der Filterpatrone mit konstanter Geschwindigkeit ohne die Bildung von bevorzugten Stromfäden stattfindet.

Die erste und wichtigste konstruktive Besonderheit besteht darin, daß die Filterpatrone zusätzlich zu den Schichten aus adsorbierendem Material, aus Fasermaterialschichten besteht, die zum ersten Mal alle fest aneinanderliegen, einzeln auswechselbar und waschbar sowie virtuell flach sind.

Die zweite originelle konstruktive Besonderheit der obigen Vorrichtung besteht im Aufbau der Filterpatrone, die außer aus Schichten aus adsorbierenden Material, vor demselben aus einer oder mehreren Schichten leichten Vliesstoffes, aus mindestens einer Schicht Mineralfaserpapier und aus mindestens einer Schicht schwerem Vliesstoff besteht.

Die Schichten aus leichtem Vliesstoff, die zwischen der inneren Lochblechwand und den Schichten aus Mineralfaser-Filter papier angeordnet sind, vermeiden, daß dieses am nicht durchlöcherten Papier der Blechwand zur Anlage kommt und dadurch den Durchfluss des Mediums behindert.

Die Schichten aus Mineralfaser-Papier sind in der Lage, Teilchen $>0,1$ $\mu$m abzuscheiden, während diejenigen aus schwerem Vliesstoff in der Lage sind, Teilchen $>1$ $\mu$m aufzuhalten.

Eine dritte originelle konstruktive Eigenschaft des Gerätes besteht darin, daß der Deckel und der Boden gegeneinander austauschbar sind und mit Schrauben an den endseitigen Flanschelementen des Zentralkörpers befestigt sind, ohne daß zum Vermeiden von Leckverlusten des kontaminierten Mediums Dichtungen erforderlich sind, da die Dichtigkeit des Gerätes durch die übereinanderliegenden und umgekehrten Endseiten der verschiedenen Faserfilterschichten, aus welchen die Filterpatrone besteht, gewährleistet wird, die über die Flanschen hinausgreifen, mit denen die Endkanten der beiden Lochbleche verbunden sind, und die zwischen diesen Flanschen und dem Deckel bzw. dem Boden des Filtergerätes eingeklemmt sind.

Die erfindungsgemässe Vorrichtung weist als viertes originelles konstruktives Kennzeichen einen Filtersack zum Abscheiden von Teilchen >2 $\mu$m, der ebenfalls für Reinigungszwecke herausnehmbar ist und sich auf einer Seite bis über das obere Ende der scheweren Vliesstoffschicht hinaus erstreckt und auf der anderen Seite an das obere Ende einer mittleren zylindrischen Lochblechsäule befestigt ist, die zur Aufnahme und zum Schutze eines Laufrades und des entsprechenden Antriebsmotors - falls diese in das Gerät eingebaut sind - dient, wobei dieser Filtersack und diese Lochblechsäule zum Dämpfen der Geschwindigkeit des Durchflussmediums in dem Gerät geeignet sind.

Ein fünftes originelles konstruktives Kennzeichen besteht darin, dass oben in der Mitte der Vorrichtung ein unten offener Diffusorzylinder vorgesehen ist, der in der unteren Hälfte seiner Mantelfläche gelocht ist, einen grösseren Durchmesser als die oben genannte Lochblechsäule aufweist und an sich dazu geeignet ist, die Geschwindigkeit des über den Diffusorkegel einströmenden Mediums zu dämpfen und eine besonders leisen Betrieb des Gerätes zu ermöglichen, wobei das Medium zum Teil durch den Filzsack, teilweise zur Filterpatrone, und zum Teil in die mittlere Säule zum Filtrieren des Kühlgases des eventuell vorhandenen Motors geleitet wird und daher auch wieder gegen die Filterpatrone strömen kann, indem es unter dem Filzsach hindurchfliesst.

Diese hauptsächlichen und weitere weniger wichtige Kennzeichen gehen deutlicher aus der nachstehenden Beschreibung mit Bezug auf die beiliegenden Zeichnungen hervor.

Diese erläutern beispielsweise eine bevorzugte, jedoch nicht allein darauf beschränkte Ausführungsform der erfindungsgemässen Filtergerätes. Dabei zeigt:

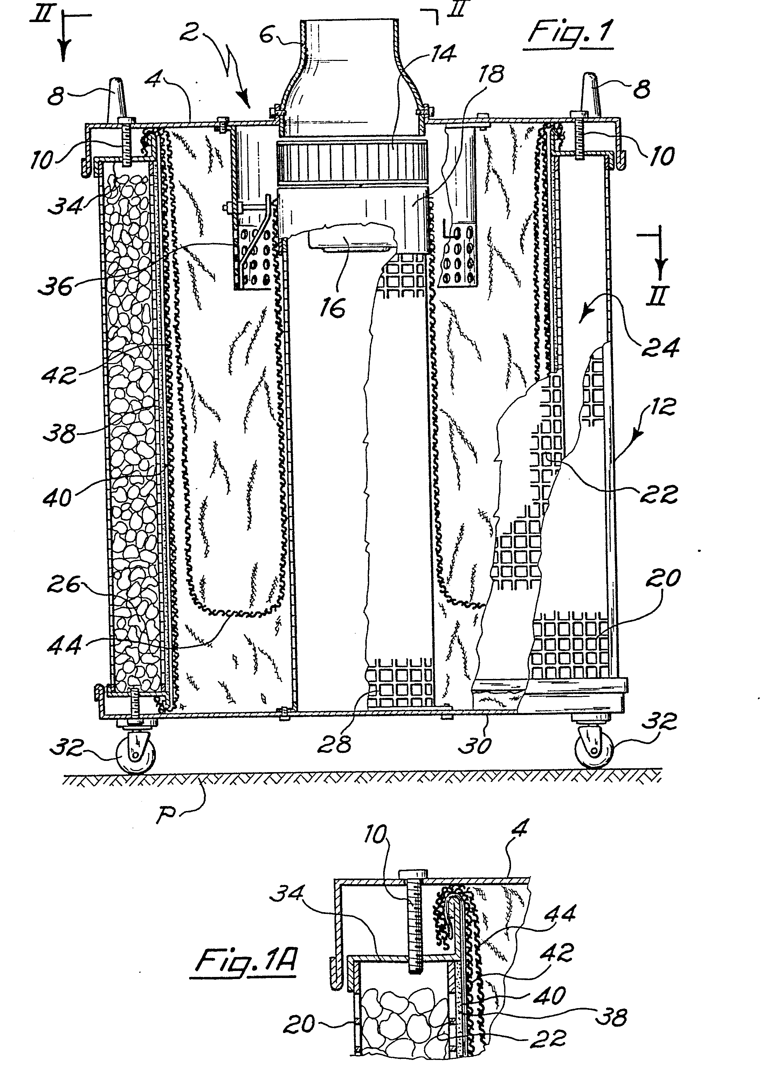

Fig. 1 Das erfindungsgemässe Gerät in einer Seitenansicht, teilweise im Schnitt;

Fig. 1A Einer erweiterne Ausschnitt der Befestigung des Deckels am Zentralkörper des Geräts;

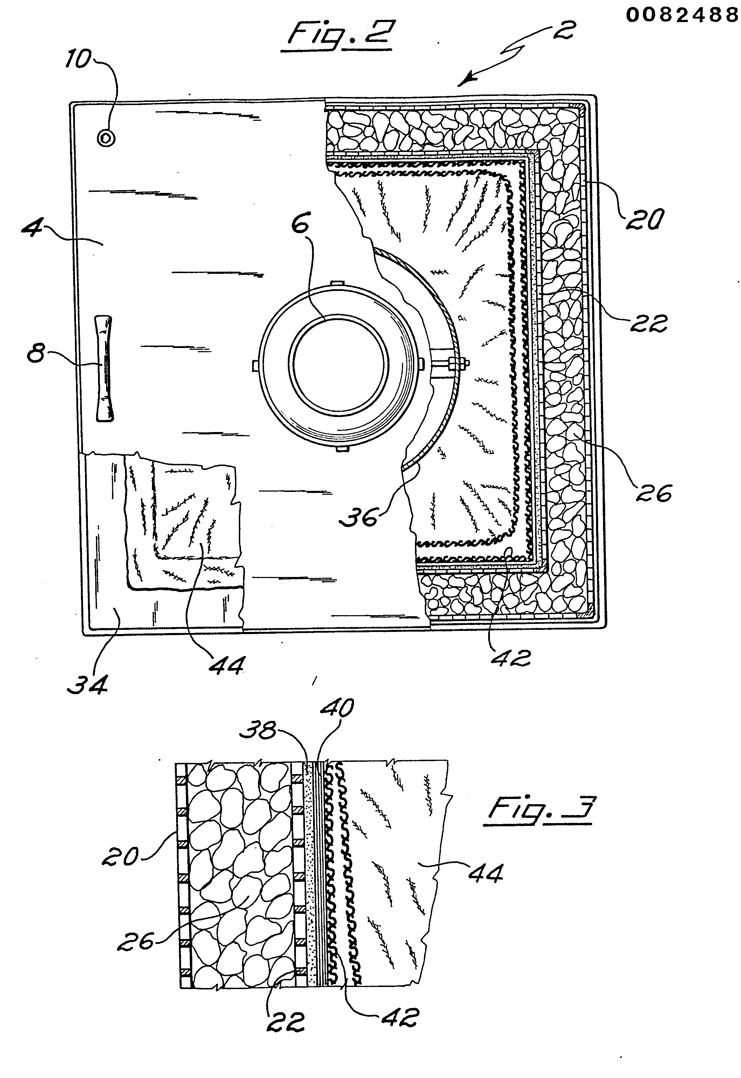

Fig. 2 Einen Schnitt nach der Linie II-II von Bild 1, wobei zum besseren Verständnis einige Teile in Ansicht dargestellt sind;

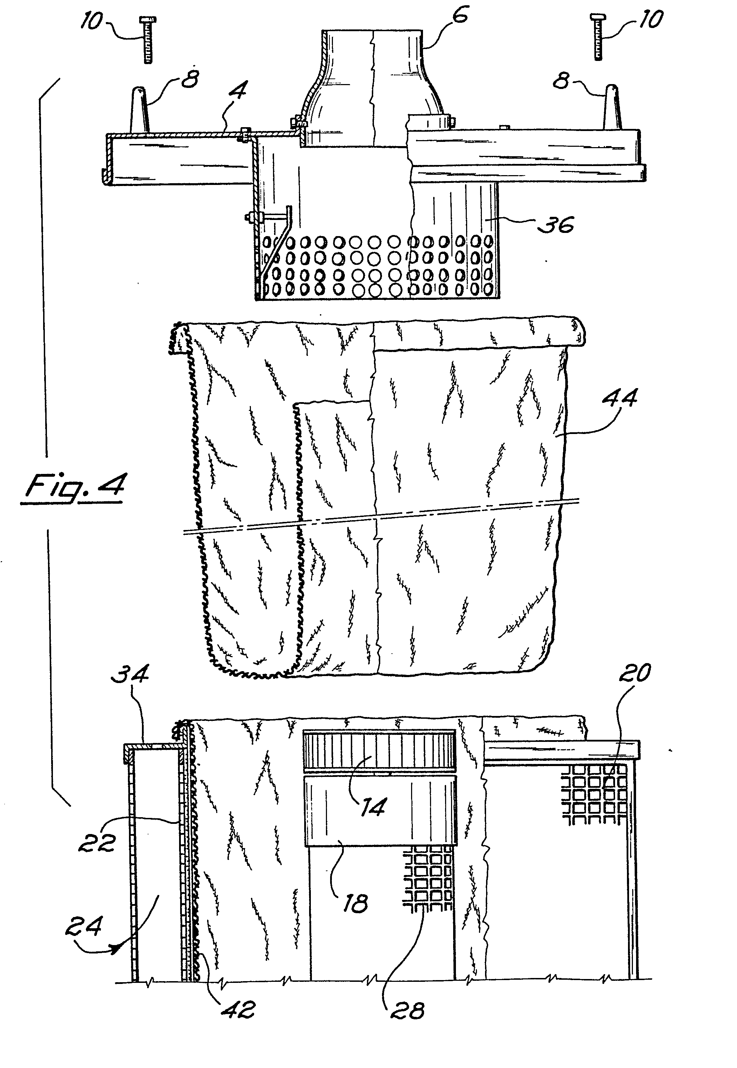

Fig. 3 Ein den Aufbau der Filterpatrone erläuterndes Detail im Schnitt;

Fig. 4 Die erfindungsgemässe Vorrichtung in auseinandergenommenem Zustand.

Wie aus der Zeichnung hervorgeht, besteht die Aussenkonstruktion der insgesamt mit 2 bezeichneten Vorrichtung aus einem Deckel 4, aus einem einteiligen Zentralkörper 12 und einem Boden 30.

Am Deckel 4 ist der Lufteintrittskegel 6 aufgebaut und sind die Handgriffe 8 vorgesehen.

Der Zentralkörper 12 weist an seinem Umfang die äusseren 20 und die inneren 22 Lochblechwände auf, zwischen denen in einem Zwischenraum 24 das adsorbierende Material, zum Beispiel Aktivkohle 26, aufgenommen werden kann.

Der Deckel 4 und der Boden 30 können mit dem Zentralkörper 12 durch Schrauben 10 vereinigt werden, die dazu geeignet sind, sie mit den Endflanschen 34 dieses Körpers 12 zu verbinden.

Dichtungen zum Vermeiden von Leckverlusten des kontaminierten Mediums sind nicht erforderlich, da die Abdichtung des Gerätes 2 dadurch erzielt wird, daß die Endseiten der über die Flanschen 34 herumgelegten Faserstoffschichten der Filterpatrone sich überlappen und zwischen dem Deckel 4 (oder dem Boden 30) und den Flanschen 34 eingeklemmt werden.

Die filterpatrone stellt das wichtigste originelle Kennzeichen der erfindungsgemässen Vorrichtung dar, da sie aus mehreren Faserelementen besteht, deren Anordnung so getroffen ist, daß sie auch einzeln herausnehmbar und auswechselbar sind, und vor allen Dingen, weil sie aus aneinander anliegenden einzelnen, virtuell flachen Faserelementen aufgebaut ist, die erlauben, daß das Medium (im Ausführungsbeispiel: die Luft) ohne Bildung von bevorzugten Stromfäden über die ganze Oberfläche mit einer konstanten Geschwindigkeit - je nach gewünschten Wirkungsgrad - zwischen 0,01 und 0,25 m/s, gegen die adsorbierenden Materialschichten gelangt und weil schließlich das Gerät von aussen nach innen mit einer oder mehreren Schichten leichten Vliesstoffes 38, der verhindert, daß die Papierfilterschichten 40 an der Blechwand 22 anhaften, und davor weiterhin mit mindestens einer ebenen Schicht aus Mineralfaserfilterpapier und mindestens einer Schicht aus schwerem Vliesstoff 42 ausgestattet ist.

Schliesslich ist als letzte Neuerung ein Filtersack 44 vorgesehen, der ebenfalls auswechselbar ist, da er an einem Ende durch den Deckel 4 festgehalten wird und sich mit den oberen Endabschnitten der Faserelemente überlappt, aus welchen die Filterpatrone besteht, während er am anderen Ende - mit entsprechenden Mitteln - am oberen nicht gelochten Abschnitt 18 der mittleren Säule 28 befestigt ist.

Dieser Sack 44 erstreckt sich auf kennzeichnende Weise bis auf ein bestimmtes Niveau über dem Boden 30, und ermöglicht dadurch, daß das Medium (im vorliegenden Falle die Luft) durch die mittlere gelochte Säule 28 hindurchströmen, den Motor bei Bedarf kühlen und aus ihr unter dem Sack 44 an der Unterseite wieder austreten kann, so daß ein guter Wirkungsgrad des Geräts auch dann gewährleistet wird, wenn der Boden des Sackes 44 durch die angesammelten Verunreinigungen verstopft sein sollte.

In der Zeichnung sing mit 14 ein Ventilatorlaufrad 14 und mit 16 ein Motor bezeichnet, die jedoch nur beispielshalber eingezeichnet sind, da sie weggelassen werden können und zum Beispiel auch ausserhalb des Gerätes vorgesehen werden könnten, von dem sie keine wesentlichen Bestandteile bilden.

Mit 18 wird wie gesagt der obere nicht gelochte Abschnitt der mittleren Blechsäule 28 bezeichnet, welche den Motor 16 verkleidet.

Aussen und konzentrisch zum oberen mittleren Abschnitt der Säule 28 ist ein kennzeichnender Diffusorzylinder 36 vorgesehen, der am Deckel 4 befestigt ist, einen grösseren Durchmesser als die Säule 28 aufweist, am Boden offen ist und im unteren Abschnitt seines Zylindermantels gelocht ist.

Dieser Zylinder 36 trägt nicht unerheblich zur Beruhigung des in das Gerät einströmenden Mediums (hier Luft) bei, dämpft zusammen mit dem Filzsack 44 die Wirbelbewegungen und bewirkt eine Dampfung des Betriebsgeräusches, falls das Gerät wie in der Abbildung zur Aufnahme eines Ventilators 14 und eines Motors 16 vorgesehen ist.

Wie schon vorausgeschickt, bezieht sich die vorstehende Beschreibung auf eine bevorzugte Ausführungsform des Erfindungsgegenstandes. Natürlich sind für den Fachmann auf diesem Gebiet zahlreiche Varianten denkbar, ohne dadurch den von den nachstehenden Ansprüchen klar umrissenen Erfindungsbereich zu überschreiten.

So können zum Beispiel auch Laufrollen 32 vorgesehen werden. Die Fasermaterialschichten 38, 40, 42 können zick-zack-förmig unter Zwischenschaltung von ungelochten Blechelementen angeordnet werden, welche dazu dienen die Zick-Zack-Filter-Schichten 38, 40, 42 in Falten zu halten, wobei die ganze Anordnung auch zwischen zwei Blechen oder Lochblechen eingeschlossen werden kann oder nicht. Der Ventilator kann durch den Läufer einer Tauchpumpe ersetzt werden, ausserhalb, oder falls nicht erforderlich, überhaupt nicht vorgesehen werden. Die Anzahl Schichten, aus welcher die Filterpatrone besteht, und insbesondere die Fasermaterialschichten 38, 40, 42 können je nach Anforderungen geändert werden. Ebenso kann die Art des adsorbierenden Materials 26, das zwischen den umfangsseitigen Lochblechwänden 20 und 22 enthalten ist, variieren. Weiterhin kann der Querschnitt des Geräts 2 statt viereckig kreisrund gewählt werden, die Abmessungen können sich ändern usw.

PATENTANSPRÜCHE

1. Vorrichtung für die Reinung von gasförmigen und flüssigen Medien von toxischen Stoffen und Partikeln geringer Konzentration, vorzugsweise mit viereckigem Querschnitt, mit einem einteiligen Zentralkörper (12), der endseitig mit entsprechenden Mitteln (10) durch einen Deckel (4) und einen Boden (30) abgeschlossen wird, wobei der Zentralkörper (12) aus zwei Lochblechen (20, 22) bestehende Umfangswände aufweist, dadurch gekennzeichnet, daß diese Bleche (20, 22) endseitig durch gleiche Flanschelemente (34) miteinander verbunden und zur Aufnahme von einer oder mehreren Schichten aus körnigem adsorbierendem Material geeignet sind, sowie dadurch daß das innere Lochblech (22) unmittelbar eine oder mehrere Schichten aus leichtem Vliesstoff (38) abstützt, der wiederum davor eine oder mehrere Schichten aus Mineralfaserpapier (40) zum Abscheiden von Partikeln 0,1 um aufnimmt, das wiederum mindestens eine Schicht aus schwerem Vliesstoff (42) zum abscheiden von Partikeln 1 um aufnimmt, wobei diese Schichten alle aneinander anliegen, je nach Bedarf einzeln auswechselbar und virtuell flach sind, so daß die Beruhigung des Fördermediums und demzufolge eine konstante Kontaktzeit des noch mit Giftstoffmolekülen und Partikeln von >0,1 $\mu$m belasteten Mediums mit sämtlichen Punkten der adsorbierenden Materialschichten (26) gewährleistet werden, die also eine geringe Dicke aufweisen können.

2. Vorrichtung für die Reinigung von gasförmigen und flüssigen Medien von toxischen Stoffen und Partikeln geringer Konzentration gemäss Anspruch 1, weiterhin dadurch gekennzeichnet, daß die Schichten aus körnigem Material (2) eine geringe Dicke zwischen 20 und 100 mm aufweisen, dank der beruhigenden Wirkung, die wie gesagt auf das schadstoffbelastete Medium vor allen Dingen durch die aneinander anliegenden und virtuell flachen Fasermaterialschichten (38, 40, 42) und vorher noch durch einen Filzsack (44), durch eine mittlere Metallsäule (28) und durch einen Diffusorzylinder (36), die oberhalb dieser Schichten im Gerät (2) angeordnet sind, ausgeübt wird, welche einen Durchgang des Medium durch die adsorbierenden körnigen Schichten je nach dem gewünschten Wirkungsgrad mit einer gleichmässigen Geschwindigkeit zwischen 0,01 und 0,25 m/s ermöglichen.

3. Vorrichtung für die Reinigung von gasförmigen und flüssigen Medien von toxischen Stoffen und Partikeln geringer Konzentration gemäss Anspruch 1 und 2, weiterhin dadurch gekennzeichnet, daß einzelne Fasermaterialschichten (38, 40, 42) vorgesehen sind, die zusammen mit den adsorbierenden Materialschichten (26), die Filterpatrone des Geräts (2) bilden und wie gesagt alle aneinander anliegen und virtuell flach sind, wobei ihre Endabschnitte sich überlappen und um die Flanschen (34), die die Lochbleche (20, 22) an ihren Enden miteinander verbinden, herumgelegt sind, so daß diese Endabschnitte effektiv zwischen dem untereinander austauschbaren Deckel (4) und Boden (30) und den genannten Flanschen (34) des Zentralkörpers (12) des Gerätes (2) durch entsprechende Mittel (10) eingeklemmt werden können, wobei diese umgelegten Faserfilterschichten (38, 40, 42) dazu geeignet sind, Leckverlüste de kontaminierten Mediums zu vermeiden, ohne daß Dichtungen erforderlich sind, und ausserdem alle zusammen oder einzeln, je nach Verschmutzungsgrad, problemlos ausgewechselt werden können.

4. Vorrichtung für die Reinigung von gasförmigen und flüssigen Medien von toxischen Stoffen und Partikeln geringer Konzentration gemäss den Ansprüchen von 1 bis 3, weiterhin dadurch gekennzeichnet, daß der darin vorgesehene Filzsack (44) zum Abscheiden von Teilchen von $>2$ $\mu$m dient und ebenfalls einfach auswechselbar ist, da er sich nach unten bis über eine bestimmte Höhe über dem Boden (30) erstreckt und ermöglicht, daß das vorher beruhigte Medium, sowohl durch den Sack, als auch unter ihm hindurch gegen die Wände der Filterpatrone (26, 38, 40, 42) gelangt, wobei das äussere Ende des Filtersacks über die Endabschnitte der Fasermaterial schichten (38, 40, 42) der Filterpatrone umgelegt ist und dadurch Leckverluste des kontaminierten Mediums aus dem Gerät verhindert und wobei ausserdem das innere Ende des Filtersackes lösbar am oberen ungelochten Teil (18) der genannten mittleren Blechsäule (28) befestigt ist.

5. Vorrichtung für die Reinigung von gasförmigen und flüssigen Medien von toxischen Stoffen und Partikeln geringer Konzentration gemäss Anspruch 1 bis 4,

dadurch gekennzeichnet, daß weiterhin die darin vorgesehene mittlere Blechsäule (28) ausser im oberen Abschnitt (18), vollkommen gelocht ist, am Boden (30) befestigt ist, in einen mit dem Deckel (4) verbundenen Diffusorzylinder (36) eingesetzt ist, und dazu geeignet ist, einen das Laufrad (14) antreibenden Motor (16) abzustützen, falls diese oben in das Gerät eingebaut werden, und

dadurch gekennzeichnet, daß dieser Diffusorzylinder (36) ohne Boden, konzentrisch und mit einem grösseren Durchmesser als die genannte mittlere Säule (28) ausgeführt ist und im unteren Abschnitt seines Zylindermantels gelocht ist, weshalb er in der Lage ist, das Betriebsgeräusch des Gerätes (2) stark zu dämpfen, falls dasselbe mit einem Motor (16) und dem entsprechenden Ventilator (14) ausgestattet wird, weiterhin das genannte Laufrad (14) gegenüber dem Einströmdiffusor (6) zu zentrieren und das angesaugte Medium weitgehend zu beruhigen, wobei es gegen den Filzsack (44) geleitet wird und das Kühlgas des eventuell vorhandenen Motors (16) gefiltert wird.

6. Vorrichtung für die Reinigung von gasförmigen und flüssigen Medien von toxischen Stoffen und Partikeln geringer Konzentration gemäss Anspruch 1 bis 5,
dadurch gekennzeichnet, daß die Fasermaterialschichten (38, 40, 42) weiterhin zick-zack-förmig unter Zwischenschaltung von ungelochten Blechelementen angeordnet werden können, die dazu dienen, die Zick-Zack-Filterschichten (38, 40, 42) in Falten zu halten, wobei die ganze Anordnung auch zwischen zwei Lochblechen eingeschlossen werden kann oder nicht.

0082488

*Fig.1*

*Fig.1A*

_Fig.2_

2

10

4

6

8

36

34

44

42

20

22

26

_Fig.3_

38

40

20

26

22

42

44

10  6  10

8  4  8

36

44

34  20

22  14

24  18

42  28

*Fig.4*

0082488

Nummer der Anmeldung

**Europäisches Patentamt**

## EUROPÄISCHER RECHERCHENBERICHT

EP  82 11 1685

| | EINSCHLÄGIGE DOKUMENTE | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
| X | DE-C- 658 966 (HUNDT & WEBER)<br>* Abbildungen; Seite 2, Spalten 11-68 *<br>--- | 1 | B 01 D 46/24<br>B 01 D 29/04 |
| A | US-A-3 252 270 (D.B. PALL)<br>--- | | |
| A | FR-A- 328 456 (G.M. KNEUPER)<br>--- | | |
| A | GB-A-2 055 254 (INDUSTRIE PIRELLI)<br>--- | | |
| A | US-A-3 773 180 (D.K. HARRISON)<br>----- | | |
| | | | RECHERCHIERTE SACHGEBIETE (Int. Cl. ³) |
| | | | B 01 D 46/00<br>B 01 D 29/00<br>B 01 D 27/00 |

Der vorliegende Recherchenbericht wurde für alle Patentansprüche erstellt.

| Recherchenort<br>DEN HAAG | Abschlußdatum der Recherche<br>31-03-1983 | Prüfer<br>BOGAERTS M.L.M. |
|---|---|---|